# FASCICULE DE BREVET EUROPEEN

(11) **EP 2 894 893 B1**
(45) Date de publication et mention de la délivrance du brevet: **04.03.2020**
(21) Numéro de dépôt: 14199472.3
(22) Date de dépôt: 19.12.2014
(51) Int. Cl.: H04W 16/22, H04W 84/18, H04W 24/06, H04L 12/24

(54) **Installation de simulation de l'état de communications radio entre entités engagées dans une opération.**
Anlage zur Simulation des Zustands von Funkkommunikationen zwischen an einer Operation beteiligten Einheiten
Installation for the simulation of the state of radio communication between entities engaged in an operation

(30) Priorité: 27.12.2013 FR 1303099
(43) Date de publication de la demande: 15.07.2015
(73) Titulaire: Thales, 92200 Neuilly Sur Seine (FR)
(72) Inventeur: Franck, Bertrand, 92622 GENNEVILLIERS (FR); Zawadzki, Eric, 92622 GENNEVILLIERS (FR)
(74) Mandataire: Lavoix

(56) Documents cités:
- US-A1- 2010 074 141
- Adarshpal S. Sethi and Vasil Y. Hnatyshin: "The Practical OPNET User Guide for Computer Network Simulation", 24 août 2012 (2012-08-24), Chapman and Hall/CRC, XP002728630, ISBN: 9781439812051 * Chapter 1, Section 1.1; Chapter 2, Sections 2.1 - 2.2; Chapter 4, Section 4.1; Chapter 5, Sections 5.1 - 5.4; Chapter 7, Sections 7.1 - 7.2.3; Chapter 12, Section 12.1, Sections 12.6 - 12.8 *
- OPNET TECHNOLOGIES ET AL: "OPNET WIRELESS MODULE", INTERNET CITATION, 2005, XP002428434, Extrait de l'Internet: URL:http://web.archive.org/web/20051218054 734/www.opnet.com/products/brochures/Wirel ess.pdf [extrait le 2007-04-05]

## Description

La présente invention concerne une installation de simulation de l'état de communications radio entre entités engagées dans une opération simulée du type comportant :
- un générateur d'entités permettant de définir un ensemble d'entités engagées dans l'opération ;
- des moyens d'élaboration d'un scénario propre à décrire l'enchainement d'actions à effectuer dans l'opération ;
- un générateur de trafic radio propre à simuler le trafic radio entre les différentes entités ;
- un module de simulation de l'opération propre à exécuter le scénario et définir les conséquences des actions prévues par le scénario et à intégrer ces conséquences dans la suite du déroulement du scénario ; et
- un module de restitution de l'état au cours du temps des communications radio entre entités engagées dans l'opération simulée.

Pour évaluer la faisabilité de certaines opérations civiles ou militaires, il est connu d'utiliser des logiciels de simulation permettant, outre de simuler les opérations sur le terrain, de reproduire par simulation aussi fidèlement que possible l'état des communications entre les entités au fur et à mesure de la réalisation simulée des opérations. Ces logiciels fournissent des informations techniques sur l'état des communications entre les différentes entités engagés au cours du temps. En particulier, ils donnent des informations comme l'existence ou non de communications possibles entre les entités, la qualité de service disponible sur chaque liaison, le taux d'utilisation de chaque liaison, le nombre de données non transmises à destination etc...

Ces communications, qui s'effectuent par des moyens radio, peuvent être de natures différentes. Elles sont très sensibles aux positions relatives des émetteurs-récepteurs, à la géographie du terrain, et à l'encombrement éventuel de la bande passante au cours des opérations.

Certaines absences de communications, ou des communications dégradées peuvent rendre difficiles les opérations, voire les rendre matériellement impossibles, dans la réalité.

Ainsi, de tels logiciels de simulation sont particulièrement utiles lors de la définition des moyens à engager dans une opération, dans la définition du planning de cette opération, ou encore dans la définition des moyens techniques de communication qui doivent être utilisés pour réaliser au mieux l'opération projetée.

Ces logiciels de simulation sont également très utiles lors de la spécification, de la conception et de la validation de nouveaux équipements de communications par les industriels. Ils permettent de définir le comportement souhaité des nouveaux équipements, d'en vérifier le bon fonctionnement, d'extrapoler les performances système d'ensemble quand ils sont mis en œuvre dans une opération. Ils permettent également d'étudier et d'assurer l'interopérabilité et la compatibilité avec les moyens existants et déjà déployés.

Dans la pratique, les logiciels de simulation connus actuellement mettent en œuvre des procédés dans lesquels, pour toute la simulation, des hypothèses de trafic entre les entités sont définies suivant des hypothèses statistiques indépendantes de l'évolution réelle de la simulation, ou par des automates programmables générant un trafic périodique.

Un logiciel de simulation connu de l'état de la technique est par exemple présenté dans Sethi et Hnatyshin, « The Practical OPNET User Guide for Computer Network Simulation », 24 août 2012, Chapman and Hall/CRC.

Le document US 2010/074141 A1 présente la simulation de l'état de communications radio entre entités engagées dans une opération militaire.

L'invention a pour but de proposer une installation de simulation de l'état des communications radio permettant une meilleure prise en compte des comportements des différentes entités au cours de la simulation.

A cet effet, l'invention a pour objet une installation de simulation du type précité, caractérisée en ce qu'elle comporte :
- une matrice d'échanges définissant la politique et des règles d'échanges entre les entités,
- des moyens pour affecter, à chaque entité, des processus regroupés en métiers définissant des activités successives à mettre en œuvre pendant le déroulement du scénario, chaque activité prévoyant la mise en œuvre de communications spécifiques, et
- des moyens pour simuler, pour chaque activité, les communications spécifiques pour chaque entité au cours du déroulement du scénario.

Suivant des modes particuliers de réalisation, l'installation comporte l'une ou plusieurs des caractéristiques suivantes :
- l'installation comporte, pour chaque activité, une description des flux radio entre entités impliquées,
- la description des flux radio comprend des spécifications sur l'un au moins des modes d'échange de données ou informations parmi le protocole d'échange, le degré de fiabilisation des échanges, le degré de priorité, le type de sécurité et chiffrement, et la date de péremption des données échangées,
- l'installation comporte, pour chaque entité, une description des moyens radio mis en œuvre par l'entité,
- la description des moyens radio comprend des spécifications de l'une au moins des méthodes de comportement utilisées par les moyens radio pour transmettre des données électromagnétiques vers d'autres moyens radio en minimisant les effets adverses naturels (affaiblissement dus à la distance, bruits électromagnétiques, obstacles liés au relief ou aux constructions, interférences dues à d'autres moyens radio opérants sur la même zone), des méthodes utilisées par les moyens radio pour allouer et optimiser les créneaux temporels et les fragments du spectre électromagnétique nécessaires à tout échange d'information, et des méthodes utilisées par les moyens radio pour trouver les routes permettant d'échanger des données et informations avec des contraintes de quantité, de qualité et d'intégrité des données,
- l'installation comporte des moyens de modification, en cours de scénario, des processus affectés à chaque entité dans les moyens pour affecter des processus, à chaque entité, et
- l'installation comporte des moyens de modification, en cours de scénario, de la matrice d'échanges pour modifier la politique et les règles d'échanges par communication radio.

L'invention sera mieux comprise à la lecture de la description qui va suivre, donnée uniquement à titre d'exemple et faite en se référant aux dessins, sur lesquels :
- la figure 1 est une vue schématique d'une installation selon l'invention ;
- la figure 2 est une vue schématique des principaux modules fonctionnels de l'installation de la figure 1 ;
- la figure 3 est une vue d'un affichage montrant les entités engagées et le terrain sur lesquels les phases successives sont représentées ;
- la figure 4 est une vue d'un affichage montrant des processus associés à des entités ; et
- la figure 5 est une vue d'un affichage montrant des procédures mises en œuvre dans les processus.

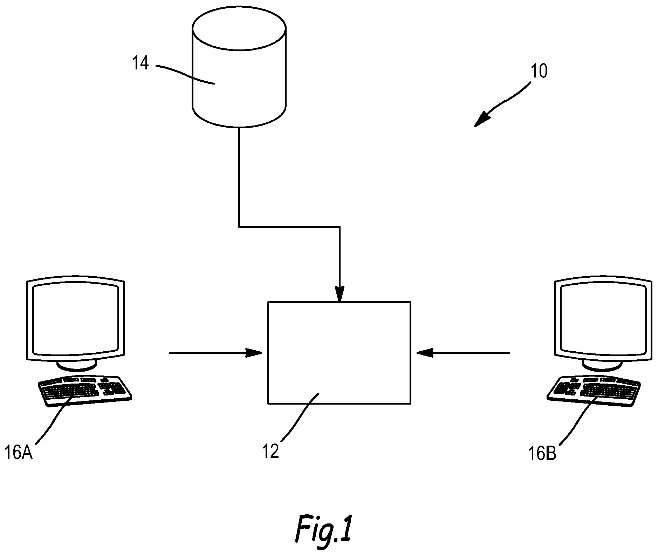

L'installation 10 illustrée sur la figure 1 est destinée à la simulation de l'état des communications radio entre entités lors d'une simulation d'une opération, par exemple un conflit opposant deux groupes d'entités opposées telles que deux armées ennemies.

Dans la suite, chaque entité formée par exemple d'un véhicule équipé d'une radio, d'un soldat équipé d'une radio ou de tout équipement radio fixe ou mobile, par exemple un relai est désignée par nœud.

L'installation comporte une unité centrale de traitement d'informations 12 propre à mettre en œuvre un logiciel constitué d'un ensemble de programmes adaptés, une base de données 14 pour le stockage de données et de programmes ainsi qu'au moins deux terminaux 16A, 16B reliés à l'unité centrale de traitement d'informations 12.

Ces terminaux 16A, 16B sont propres à configurer les conditions de la simulation pour chaque partie engagée, par exemple une armée. Chaque terminal est propre à modifier, au cours de la simulation, l'évolution de l'opération pour les entités ou nœuds de l'armée dont il a la maîtrise. Un terminal est également propre à être utilisé pour commander directement les opérations pour une armée, l'autre armée étant gérée seulement par un moteur de la simulation.

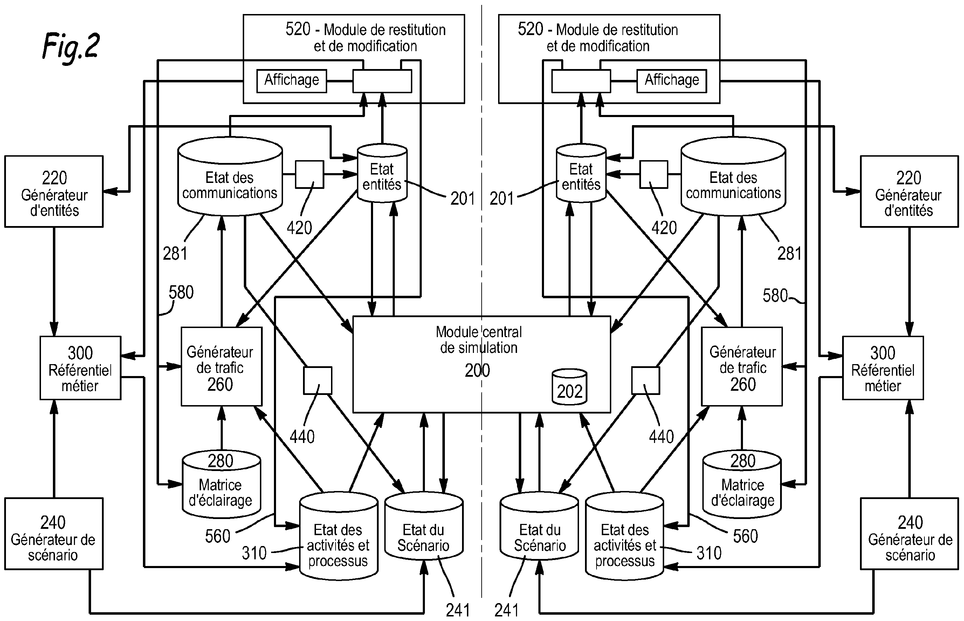

Comme illustré sur la figure 2, le logiciel comporte un module central de simulation 200 propre à recevoir des données issues des terminaux 16A et 16B et à simuler, à partir d'un moteur de simulation, le déroulement des opérations au cours du temps. Il est propre en particulier à simuler les communications radio en évaluant la possibilité qu'elles soient ou non établies et leur qualité. Le module central de simulation 200 sera décrit plus en détail dans la suite.

Le module de simulation comporte une base de données 202 contenant notamment un modèle informatique de communication, un modèle des équipements radio de chaque nœud, et des modèles de propagation des communications radio en fonction des conditions.

Pour permettre la simulation, chaque terminal 16A, 16B comporte un générateur d'entités 220 permettant de définir un ensemble d'entités engagées dans l'opération. Ce générateur est propre en particulier à définir les véhicules et les hommes engagés avec leurs moyens radio, chacun formant une entité ou nœud au sens de la simulation. Il permet de définir, pour chaque entité, les équipements dont elle dispose et en particulier les équipements radio dont elle dispose avec leurs caractéristiques techniques précises.

A cet effet, le module de génération d'entités 220 comporte des moyens de saisie et de stockage de l'ensemble des entités engagées, avec pour chacune d'elles, les moyens de communication radio dont elle dispose.

Pour chaque moyen de communication, une description des moyens radio est mémorisée. Cette description comprend des spécifications de l'une au moins des méthodes de comportement parmi les méthodes utilisées par les moyens radio pour transmettre des données électromagnétiques vers d'autres moyens radio en minimisant les effets adverses naturels (affaiblissement dus à la distance, bruits électromagnétiques, obstacles liés au relief ou aux constructions, interférences dues à d'autres moyens radio opérants sur la même zone), des méthodes utilisées par les moyens radio pour allouer et optimiser les créneaux temporels et des fragments du spectre électromagnétique nécessaires à tout échange d'information, et des méthodes utilisées par les moyens radio pour trouver les routes permettant d'échanger des données et informations avec des contraintes de quantité, de qualité et d'intégrité des données.

Le générateur d'entités 220 définit en outre, les opérations, les missions militaires attribuées, la nature du terrain, les plateformes militaires engagées, le mode de déploiement, l'organisation, les manœuvres, les règles d'engagement, les comportements, la météo, l'heure de la journée et d'éventuels éléments extérieurs de l'environnement, tels que la présence de tireurs isolés.

Ces entités sont mémorisées dans une base de données 201 d'état des entités contrôlée par le module de génération d'entités 220 et le module central de simulation 200. Cette base de données stocke, lors de la simulation, l'état de chaque entité.

Chaque terminal comporte, sous la commande du générateur d'entité 220, des moyens d'affichage des entités pour l'armée associée, des caractéristiques et d'états de ces entités tels que figurant dans la base 201.

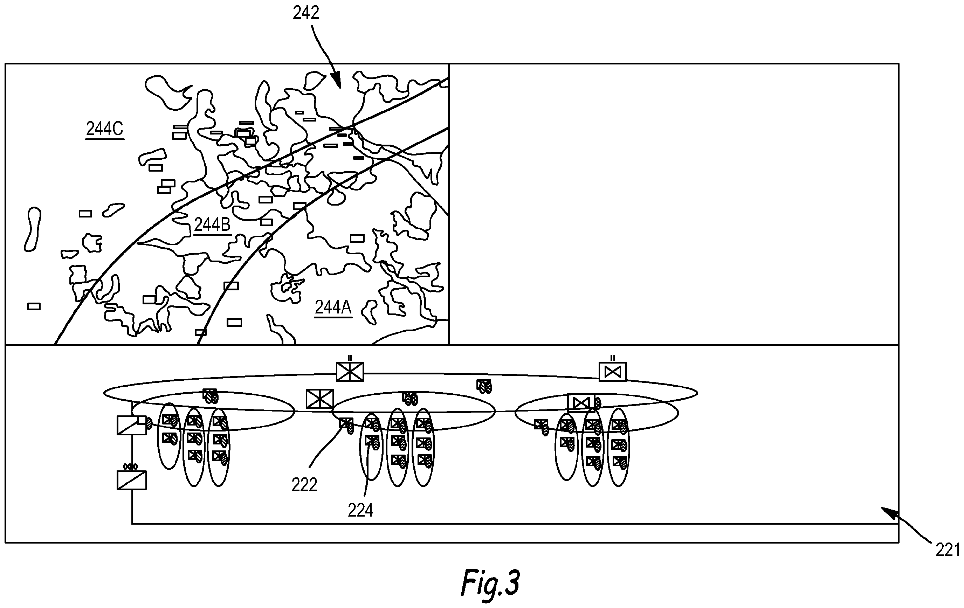

A titre d'exemple, les entités engagées constitutives d'une armée sont illustrées sur la figure 3 dans une zone 221 de l'écran d'un terminal 16A. Ces entités sont chacune représentées par un rectangle 222 associé à une ou plusieurs ellipses 224 illustrant les moyens de communication dont l'entité 222 dispose.

Les entités sont représentées de manière organisationnelle, par exemple hiérarchique, par exemple sur 4 niveaux. Chaque niveau hiérarchique ayant des prérogatives et des besoins particuliers, les entités sont équipées de moyens de communication qui varient d'un niveau hiérarchique à l'autre.

Les ellipses 224 sont chacune pourvues d'une trame intérieure représentative des caractéristiques techniques des équipements de communication dont l'entité est équipée. Toutes les technologies de télécommunication n'étant pas compatibles entre elles, seules les entités présentant des ellipses de même trame sont supposées pouvoir potentiellement communiquer entre elles.

En outre, chaque terminal 16A, 16B comporte des moyens 240 d'élaboration d'un scénario propre à définir les trajectoires, les cinématiques, les orientations, les altitudes, et les attitudes des entités au cours du temps. Ils sont propres à définir en particulier les phases successives de progression, les actions sur le terrain, ainsi que des dispositifs conditionnels ou non de déclenchement de certains événements.

Par exemple, le scénario comporte, pour les phases successives, une phase I de circulation en convoi des entités engagées, puis une phase II d'observation et enfin une phase III de combat.

Pour les dispositifs conditionnels ou non de déclenchement, le scenario élaboré depuis les moyens 240 définit une zone géométrique sensible définie sur la cartographie du terrain et associe un dispositif de déclenchement conditionné. Par exemple, ce dispositif est tel que, quand une ou plusieurs entités entrent dans cette zone sensible, une activité ou un processus est déclenché, tel que la destruction de l'entité, le brouillage des radio et/ou l'attaque du convoi.

Les moyens 240 d'élaboration d'un scénario sont propres à permettre la saisie des actions à effectuer et des zones du terrain dans lesquelles ces actions doivent être effectuées et à les illustrer sur le terminal concerné.

Une base de données 241 d'état du scénario regroupe les données caractéristiques du scénario à chaque instant de la simulation. Cette base est lue et alimentée par le module central de simulation 220 et le générateur de scénario 240.

Sur la figure 3, figure, dans une zone 242 de l'écran, une carte de la région des opérations qui est divisée en plusieurs zones 244A, 244B et 244C, chacune associée à une phase de l'opération.

Pour chacune de ces phases, des processus particuliers propres à chaque entité engagée sont définis.

Un processus est un système organisé d'activités (par exemple un processus d'observation dans le domaine militaire,) qui utilise des ressources co-localisées ou non, (personnel, équipement, matériels et informations) pour transformer des éléments entrants (par exemple des observations) en éléments de sortie dont le résultat final attendu est un service ou un produit (par exemple un rapport de synthèse des observations réalisées sur une zone). Le processus a un propriétaire qui est garant de la bonne fin et du bon fonctionnement de celui-ci.

Le scénario définit les processus qui doivent être mis en œuvre dans la simulation. Ces processus sont conditionnés en fonction du déroulement de la simulation et peuvent donc être modifiés, soit automatiquement par le moteur de la simulation, soit par un opérateur depuis le terminal 16A.

Les processus sont définis par les moyens 240 d'élaboration du scénario.

Le module de simulation 200 est associé à une base de données dans laquelle est stocké un référentiel métier 300. Ce référentiel comprend un ensemble de processus. Chaque processus regroupe des activités et peut être mis en œuvre par les différentes entités engagées.

Les processus sont regroupés au sein de métiers, l'ensemble des métiers formant le référentiel métier 300.

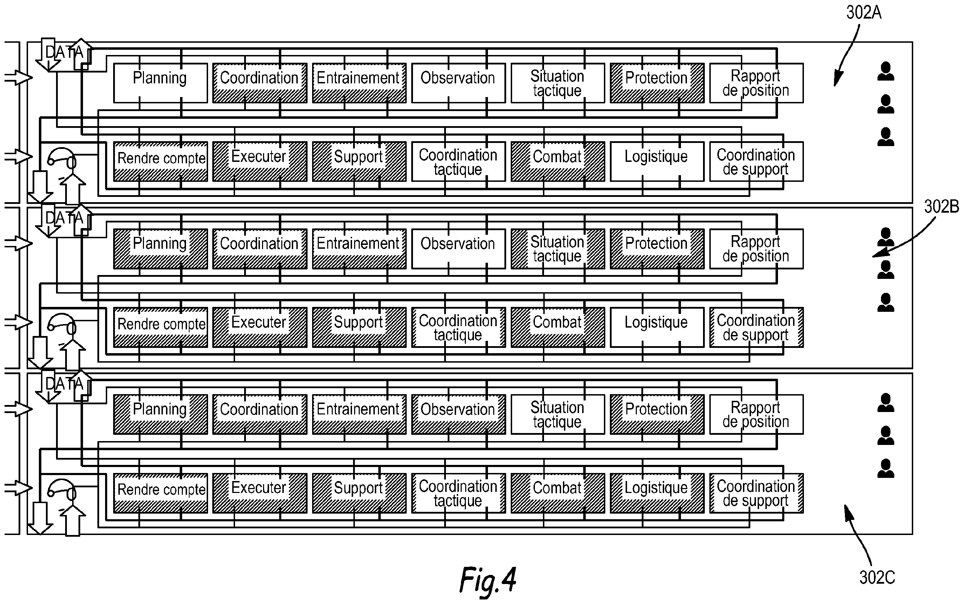

Ainsi, un référentiel militaire regroupe différents 'métiers' auxquels peuvent contribuer des entités. Les métiers, au nombre de 14 dans l'exemple considéré, sont illustrés par des blocs visibles pour les entités 302A, 302B, 302C sur la figure 4 montrant un exemple d'écran d'un terminal 16A, 16B.

Par exemple, la protection, l'observation, le combat sont des métiers du référentiel militaire.

Chaque métier regroupe un ensemble de procédures qui peuvent être mises en œuvre suivant les cas auxquels l'entité est confrontée.

Les processus d'un métier qui contiennent les activités élémentaires mises en œuvre par le métier sont multi-niveaux. Des processus ont donc des activités différentes par niveau. Par exemple, le métier 'protection' dans le domaine militaire dispose d'un Niveau H pour la protection de la force globale, un Niveau H-1 pour la protection d'une partie de l'organisation, et un Niveau H-2 pour la protection individuelle de 'sa' plateforme.

Les activités élémentaires par métier et par niveau nécessitent des informations d'entrées, qui subissent des traitements mis en œuvre par l'activité et produisent des informations et données de sortie.

Chaque processus comprend une ou plusieurs activités choisies parmi un ensemble d'activités prédéfinies pour l'entité considérée ou les entités considérées.

Des exemples de processus répartis sur plusieurs entités situées sur des entités de niveaux hiérarchiques différents 302A (niveau H), 302B (niveau H-1), 302C (Niveau H-2), sont présentés sur la figure 4. Sur cette figure sont illustrés, pour une entité type de chaque niveau hiérarchique, les métiers mis en œuvre pour chaque entité, ainsi que l'ordonnancement des flux de données entre ces entités.

Chaque entité met en œuvre des processus participant à seulement certains métiers. Ainsi, pour une entité donnée à laquelle des processus sont affectés, seuls les métiers indiqués en couleur claire lui sont affectés et ainsi, seuls les processus contenus dans ces métiers peuvent être mis en œuvre par elle.

Par exemple l'entité 302A, exécute dans la simulation, des métiers de planning, d'observation, d'information sur des situations tactiques, de report sur les positions, de coordination tactique, de logistique et de coordination des fonctions support. En revanche, elle n'a pas de métier de combat ou de protection à exécuter.

Comme illustré, les métiers des entités 302B, 302C sont différentes, bien que ces entités soient impliquées dans un même scénario.

Chacun des processus est programmé par un opérateur et mémorisé dans le référentiel métier 300 depuis le générateur de scénario 240. L'ordonnancement, la synchronisation et l'orchestration de ces processus est le moyen de conduire les opérations.

Quand un processus met en œuvre des activités localisées sur des entités différentes, réparties sur un théâtre d'opération, des informations (données, ordres, validations, autorisations, signatures) sont échangées, des traitements sont appliqués sur les données avant d'exécuter l'activité suivante du processus. Le processus peut inclure des phases itératives, procédurales, conditionnelles. L'ensemble des besoins d'échanges entre entités nécessaires au bon déroulement des processus lors de l'exécution de l'opération constitue 'les besoins en communications'.

Chaque activité d'un processus, ainsi que le processus lui-même, est exécuté dans des conditions bien précises. En particulier les informations entrantes doivent répondre à plusieurs critères, d'abord un critère de quantité : les informations nécessaires à l'activité doivent toutes être disponibles sur le nœud qui exécutera les traitements liés à l'activité, ensuite un critère de qualité : les données d'entrées doivent être récentes quand on les teste en fonction de date de péremption ou de contraintes de délais d'acheminement et ensuite un critère d'intégrité : les données d'entrées ne doivent ni être corrompues, ni perdues, ni répudiées.

Les dysfonctionnements du système ou des moyens de communication tels que l'impossibilité de communication radio ou des difficultés dans ces communications radio peuvent impacter fortement l'exécution de l'opération en perturbant les flux d'informations entre activités des processus. Il peut s'agir par exemple de congestion, de famine, d'isolation, de blocage, de modes dégradés etc.

Le module central de simulation 200 est propre à examiner ces critères, sur l'ensemble des entités mis en œuvre dans l'opération. Il permet d'évaluer l'efficacité, les performances, le rendement du système et des équipements de communications radio. Il est propre à restituer ces évaluations aux terminaux 16A ou 16B pour mise à disposition des évaluations à un utilisateur.

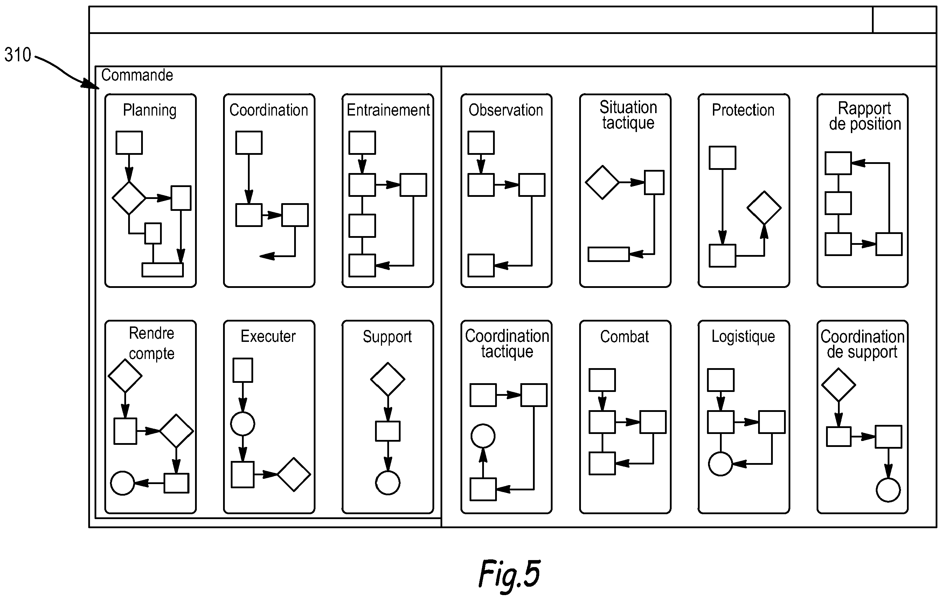

Des exemples de procédures sont décrits sur la figure 5.

Chaque processus 301 comporte un ordinogramme avec des activités enchainées avec éventuellement des tests entre les activités conditionnant les activités.

Certaines activités mettent en œuvre des communications avec d'autres entités suivant des modes particuliers de communication prédéfini, avec des débits particuliers et pendant des durées prédéterminées. En particulier, les activités définissent les communications qui doivent avoir lieu avec les entités de niveau hiérarchique supérieur, identique et inférieur. Les activités ne prévoient que les destinataires des communications sans en définir le contenu, le mode de codage, le débit, le volume, lesquels sont définis par une politique et des règles d'échange définies par ailleurs.

Ainsi, par exemple, une activité définit les destinataires pour la communication.

Chacune de ces activités est saisie par un opérateur et est mémorisée dans le référentiel 300 depuis les moyens d'élaboration d'un scénario 210.

Les processus prévoient les activités mises en œuvre en cas de difficulté, ou de performances dégradées de communication lors d'une activité, par exemple sous la forme de branches alternatives, de modes dégradés, de changement de configurations ou de modifications organisationnelles.

Ainsi par exemple, un processus prévoit qu'en cas de non communication, la conséquence est une activité de déplacement de l'entité vers un autre point du terrain, ou au contraire une activité d'arrêt de celle-ci ou encore une activité d'augmentation de la puissance d'émission des moyens radio associés à l'entité.

Le simulateur comporte une base de données 310 comprenant à chaque instant l'état des activités et des processus de chaque entité.

Le simulateur comporte également un générateur de trafic 260 propre à simuler le trafic radio entre les différentes entités en fonction des activités de chaque entité à l'instant donné telles que prévues par les processus mis en œuvre dans le scénario.

Chaque entité est capable de participer à certains processus de certains métiers (pas tous) en contribuant via des activités. Les capacités des entités en terme d'activité, processus, métier sont définies par des politiques générales - par exemple, par niveau hiérarchique - (programmées grâce au module 'générateur de trafic' 260). Ces politiques générales peuvent être substituées par des politiques particulières, voire des processus individuels si besoin est.

Ce générateur de trafic est associé à une matrice d'échanges 280, c'est-à-dire un ensemble de données définissant la politique et les règles d'échange d'informations entre les entités. Par exemple, cette politique définit que, chaque entité doit reporter à l'entité hiérarchiquement supérieure sur une fréquence radio déterminée avec une périodicité préétablie. De même, cette entité doit disséminer auprès des entités de niveau hiérarchique inférieur un ensemble d'ordres sur une fréquence déterminée avec une périodicité définie dépendant de la phase des opérations.

Par exemple, un rapport doit être fait à l'entité hiérarchiquement supérieure toutes les 10 minutes, sur une fréquence donnée avec un codage donné en transmettant des images et du texte pour un volume de données compris entre dans une plage prédéfinie.

Le générateur de trafic 260 simule les communications telles que définies dans chaque activité, et en appliquant la politique et les règles d'échange de la matrice d'échange. Il détermine en particulier si la communication peut avoir lieu, compte tenu des autres communications en cours, de l'état et de la position des entités, et si cette communication ne peut avoir lieu correctement, il simule l'état dégradé ou absent de cette communication.

Pour ce faire, le générateur de trafic 260 prend en compte, pour chaque activité, une description des flux radio entre entités impliquées.

La description du flux radio mémorisée pour chaque entité comprend des spécifications sur l'un au moins des modes d'échanges de données ou informations parmi le protocole d'échange, le degré de fiabilisation des échanges, le degré de priorité, le type de sécurité et chiffrement, et la date de péremption des données échangées.

Le générateur 260 prend en compte également la description des moyens radio mis en œuvre pour chaque entité.

Une base de données 281 comprend à chaque instant l'état courant des communications tel que fourni par le générateur de trafic 260. Le contenu de la base 281 est utilisé par le module central de simulation pour la mise en œuvre de la simulation en tenant compte de l'état courant de communication de chaque entité.

Le logiciel de simulation comporte des premiers 420 et second 440 moyens de modification respectivement des entités, et notamment de la mobilité, du comportement, des règles d'engagement, voire de l'organisation) et/ou des moyens d'élaboration du scénario en fonction de l'évolution réelle des opérations simulées par le module central de simulation 200 et de l'état des communications.

Sur la figure 2, ces premiers moyens de modification des entités 240 sont illustrés par des boucles de rétroaction 420 agissant de la base d'état des communications 281 vers la base d'état des entités 201.

Par exemple, un événement externe, une alerte, déclenche un arrêt d'une partie de l'organisation et est suivie de débarquement de soldats équipés eux également de moyens de communication, qui auront une activité propre.

De même, le logiciel de simulation comporte des seconds moyens 440 de modification propres à assurer la modification du scénario et agissant alors sur la base d'états du scénario 241, par l'intermédiaire d'une boucle de rétroaction supplémentaire 440, pour tenir compte des difficultés, et plus généralement des états des communications, ceci en fonction des conséquences définies dans chacune des procédures figurant dans les processus issus du référentiel 300.

Par exemple, la destruction d'une partie de l'organisation nécessite une reconfiguration de la manœuvre, des activités et des communications.

Enfin, l'installation comporte un module 520 de restitution permettant au travers des terminaux 16A, 16B la mise à disposition d'informations sur :
- l'état Technique, au cours du temps, des communications radio entre entités engagées dans l'opération simulée. Cette restitution est faite par exemple sous forme de métriques numériques, d'indicateurs de performances, de diagramme représentant le nombre et le type de communication ayant échoué, ainsi que le débit de transmission sur un réseau.
- la 'Qualité des Services' (QoS) opérationnels mis à disposition des entités. Cette restitution est faite par exemple sous forme de métriques numériques, d'indicateurs de performances, de diagramme indiquant la qualité de service tels que la capacité à tenir des conférences phonie, d'envoyer de la messagerie de commandement, de diffuser des flux vidéos, de connaître la position des forces amies.
- les 'Contrats de services' (SLA) qui sont des engagements entre clients (les entités ou catégories d'entités) et fournisseurs (les services et moyens de communications). Ils évaluent l'attente des parties sur le contenu des prestations (par exemple la disponibilité du service conférence phonie), leurs modalités d'exécution (une seule conférence phonie à la fois aux niveaux inférieurs), les garanties de niveau de service (par exemple 95% de disponibilité du service conférence phonie pour 85% des entités sur une mission de durée 4h).

Le logiciel de simulation comporte également deux boucles de correction supplémentaires 560 et 580 propre à agir, soit sur la base d'état des activités 310, soit sur le générateur de trafic 260 et/ou la matrice d'échange associée 280.

Ainsi, la boucle 560 est propre à agir sur la base d'état des activités 310 afin d'adapter certaines procédures et activités à l'état des communications (et/ou QoS, et/ou SLA), ou pour créer une marge opérationnelle suite à des évènements inopinés par exemple une attaque ou un accident. Ces modifications sont faites par un opérateur ou de manière automatique depuis les moyens de restitution 520 par exemple pour favoriser une catégorie d'entités au détriment d'autres entités quand l'état des communications est mesuré comme dégradé.

Par exemple, en fonction du contexte d'exécution du scénario, certains services peuvent être privilégiés au détriment d'autres services : le service Voix est maintenu, quitte à dégrader certains services 'données' par exemple.

Suivant un autre exemple, en fonction du contexte d'exécution du scénario la qualité des services voix au niveau des combattants est favorisée, et les services de messagerie opérationnelle pour les niveaux de commandement sont privilégiés.

En outre, la boucle 580 est propre à agir sur le générateur de trafic 260 et la matrice d'échange associée 280 afin d'adapter le trafic à l'état des communications (et/ou QoS, et/ou SLA), et/ou pour créer une marge opérationnelle suite à des évènements inopinés par exemple une attaque ou un accident. Ces modifications sont faites par exemple via des changements de politique de trafic pour certaines catégories d'entités.

Par exemple, les mesures suivantes sont prises pour alléger le trafic :
- Les entités des niveaux hiérarchiques bas envoient leurs rapports d'observation deux fois moins souvent pour soulager les voies de communications ; et/ou
- Les transferts d'images et de photos sont interdits.

## Revendications

1. Installation de simulation de l'état de communications radio entre entités engagées dans une opération simulée du type comportant :
- un générateur d'entités (220) permettant de définir un ensemble d'entités engagées dans l'opération ;
- des moyens (240) d'élaboration d'un scénario propre à décrire l'enchainement d'actions à effectuer dans l'opération ;
- un générateur de trafic radio (260) propre à simuler le trafic radio entre les différentes entités ;
- un module de simulation (200) de l'opération propre à exécuter le scénario et définir les conséquences des actions prévues par le scénario et à intégrer ces conséquences dans la suite du déroulement du scénario ; et
- un module (520) de restitution de l'état au cours du temps des communications radio entre entités engagées dans l'opération simulée
**caractérisée en ce qu'**elle comporte
- une matrice d'échanges (280), associée avec le générateur de trafic radio (260), définissant la politique et des règles d'échanges entre les entités ;
- des moyens (240, 300, 310) pour affecter, à chaque entité (302A, 302B, 302C), des processus regroupés en métiers définissant des activités successives à mettre en œuvre pendant le déroulement du scénario, chaque activité prévoyant la mise en œuvre de communications spécifiques,
- des moyens (260) pour simuler, pour chaque activité, les communications spécifiques pour chaque entité au cours du déroulement du scénario, en appliquant la politique et les règles d'échanges de la matrice d'échange (280),
le scénario étant propre à définir des trajectoires, des cinématiques, des orientations, des altitudes et des attitudes des entités au cours du temps.

2. Installation de simulation selon la revendication 1, **caractérisée en ce qu'**elle comporte, pour chaque activité, une description des flux radio entre entités impliquées.

3. Installation de simulation selon la revendication 2, **caractérisée en ce que** la description des flux radio comprend des spécifications sur l'un au moins des modes d'échange de données ou informations parmi le protocole d'échange, le degré de fiabilisation des échanges, le degré de priorité, le type de sécurité et chiffrement, et la date de péremption des données échangées.

4. Installation selon l'une quelconque des revendications précédentes, **caractérisée en ce qu'**elle comporte, pour chaque entité, une description des moyens radio mis en œuvre par l'entité.

5. Installation selon la revendication 4, **caractérisée en ce que** la description des moyens radio comprend des spécifications de l'une au moins des méthodes de comportement utilisées par les moyens radio pour transmettre des données électromagnétiques vers d'autres moyens radio en minimisant les effets adverses naturels (affaiblissement dus à la distance, bruits électromagnétiques, obstacles liés au relief ou aux constructions, interférences dues à d'autres moyens radio opérants sur la même zone), des méthodes utilisées par les moyens radio pour allouer et optimiser les créneaux temporels et les fragments du spectre électromagnétique nécessaires à tout échange d'information, et des méthodes utilisées par les moyens radio pour trouver les routes permettant d'échanger des données et informations avec des contraintes de quantité, de qualité et d'intégrité des données.

6. Installation selon l'une quelconque des revendications précédentes, **caractérisée en ce qu'**elle comporte des moyens (520, 560) de modification, en cours de scénario, des processus affectés à chaque entité dans les moyens (240, 300, 310) pour affecter des processus, à chaque entité.

7. Installation selon l'une quelconque des revendications précédentes, **caractérisée en ce qu'**elle comporte des moyens (520, 580) de modification, en cours de scénario, de la matrice d'échanges (280) pour modifier la politique et les règles d'échanges par communication radio.

## Patentansprüche

1. Einrichtung zum Simulieren des Zustands von Funkkommunikationen zwischen Entitäten, die in einer simulierten Operation eingesetzt sind, des Typs, der umfasst:
- einen Entitäten-Generator (220) der gestattet, eine in der Operation eingesetzte Gesamtheit von Entitäten zu definieren;
-- Mittel (240) zum Ausarbeiten eines Szenarios, das geeignet ist, die Abfolge von in der Operation durchzuführenden Aktionen zu beschreiben;
- einen Funkverkehr-Generator (260), der geeignet ist, den Funkverkehr zwischen den unterschiedlichen Entitäten zu simulieren;
- ein Modul (200) zur Simulation der Operation, das geeignet ist, das Szenario durchzuführen und die Auswirkungen der von dem Szenario vorgesehenen Aktionen zu definieren und diese Auswirkungen in den Verlauf des Szenarios zu integrieren; und
- ein Modul (520) zur Wiederherstellung des Zustandes der Funkkommunikationen im Laufe der Zeit zwischen Entitäten, die in der simulierten Operation eingesetzt sind,
**dadurch gekennzeichnet, dass** sie umfasst
- eine Austauschmatrix (280), die dem Funkverkehr-Generator zugeordnet ist und die die Verfahrensweise und die Regeln des Austausches zwischen den Entitäten definiert;
- Mittel (240, 300, 310) zum Zuweisen von in Sparten gruppierten Prozesse, die die aufeinanderfolgenden, während des Verlaufs des Szenarios durchzuführenden Aktivitäten definieren, zu jeder Entität (302A, 302B, 302C) wobei jede Aktivität das Durchführen von spezifischen Kommunikationen voraussieht,
- Mittel (260) zum Simulieren der spezifischen Kommunikationen für jede Entität während des Verlaufs des Szenarios für jede Aktivität, in dem die Verfahrensweise und die Austauschregeln der Austauschmatrix angewandt werden,
wobei das Szenario geeignet ist, Trajektorien, Kinematiken, Orientierungen, Höhen und Attitüden der Entitäten über die Zeit zu definieren.

2. Simulationseinrichtung nach Anspruch 1, **dadurch gekennzeichnet, dass** sie für jede Aktivität eine Beschreibung der Funkströme zwischen den einbezogenen Entitäten aufweist.

3. Simulationseinrichtung nach Anspruch 2, **dadurch gekennzeichnet, dass** die Beschreibung der Funkströme Spezifikationen über mindestens eine der Austauscharten von Daten oder Informationen aus dem Austauschprotokoll, Zuverlässigkeitsgrad der Austausche, Prioritätsgrad, Sicherheits- und Verschlüsselungstyp und dem Ablaufdatum der ausgetauschten Daten umfasst.

4. Einrichtung nach einem beliebigen der vorhergehenden Ansprüche, **dadurch gekennzeichnet, dass** sie für jede Entität eine Beschreibung der von der Entität durchgeführten Funkmittel aufweist.

5. Einrichtung nach Anspruch 4, **dadurch gekennzeichnet, dass** die Beschreibung der Funkmittel Spezifikationen der einen oder mehreren der Verhaltensverfahren, die von den Funkmitteln verwendet werden, um elektromagnetische Daten zu anderen Funkmitteln zu übertragen, wobei die natürlichen nachteiligen Effekte minimiert werden (Schwächung aufgrund der Entfernung, elektromagnetisches Rauschen, Hindernisse, die dem Gebietsrelief oder den Konstruktionen geschuldet sind, Interferenzen aufgrund von anderen in der gleichen Zone operierenden Funkmitteln), Verfahren, die von den Funkmitteln verwendet werden, um Zeitschlitze und die Fragmente des elektromagnetischen Spektrums, die für jeden Informationsaustausch nötig sind, zuzuordnen und zu optimieren, und Verfahren, die von den Funkmitteln verwendet werden, um die Wege zu finden, die den Austausch der Daten und Informationen mit Einschränkungen der Menge, der Qualität und der Integrität der Daten umfasst.

6. Einrichtung nach einem beliebigen der vorhergehenden Ansprüche, **dadurch gekennzeichnet, dass** sie Mittel (520, 560) zur Modifikation der jeder Entität zugewiesenen Prozesse in den Mitteln (240, 300, 310) zum Zuweisen von Prozessen zu jeder Entität während des Verlaufs des Szenarios aufweist.

7. Einrichtung nach einem beliebigen der vorhergehenden Ansprüche, **dadurch gekennzeichnet, dass** sie Mittel (520, 580) zur Modifikation der Austauschmatrix (280) zum Modifizieren der Verfahrensweise und der Austauschregeln durch Funkkommunikation während des Verlaufs des Szenarios aufweist.

## Claims

1. An installation for simulating the state of radio communications between entities engaged in a simulated operation of the type including:
- a generator of entities (220) allowing definition of a set of entities engaged into the operation;
- means (240) for elaborating a scenario able to describe the sequencing of actions to be carried out in the operation;
- a radio traffic generator (260) able to simulate radio traffic between the different entities;
- a module (200) for simulating the operation able to execute the scenario and to define the consequences of the actions provided by the scenario and to integrate these consequences into the subsequent course of the scenario; and
- a module (520) for restoring the state during the period for radio communications between entities engaged into the simulated operation,
**characterized in that** it includes
- a matrix of exchanges (280), associated with the radio traffic generator (260), defining the policy and the rules of exchanges between the entities;
- means (240, 300, 310) for assigning to each entity (302A, 302B, 302C), processes grouped in jobs defining successive activities to be applied during the course of the scenario, each activity providing the application of specific communications,
- means (260) for simulating, for each activity, the specific communications for each entity during the course of the scenario, by applying the policy and the rules of exchanges of the matrix of exchanges (280),
the scenario being suitable for defining trajectories, kinematics, orientations, altitudes and attitudes of the entities over time.

2. The simulation installation according to claim 1, **characterized in that** it includes for each activity, a description of the radio fluxes between involved entities.

3. The simulation installation according to claim 2, **characterized in that** the description of the radio fluxes comprises specifications on at least one of the modes for exchanging data or information from among the exchange protocol, the reliability degree of the exchanges, the degree of priority, the type of safety and encryption, and the expiry date of the exchange data.

4. The installation according to any of the preceding claims, **characterized in that** it includes, for each entity, a description of the radio means applied by the entity.

5. The installation according to claim 4, **characterized in that** the description of the radio means comprises specifications of at least one of the behavioral methods used by the radio means for transmitting electromagnetic data towards other radio means while minimizing natural opposing effects (attenuation due to the distance, electromagnetic noises, obstacles related to the topology or to the buildings, interferences due to other radio means operating in the same area), methods used by the radio means for allocating and optimizing the time slots and the fragments of the electromagnetic spectrum required for any exchange of information, and methods used by the radio means for finding routes allowing exchange of data and information with constraints on amount, quality and integrity of the data.

6. The installation according to any of the preceding claims, **characterized in that** it includes means (520, 560) for modifying during the scenario, the processes assigned to each entity in the means (240, 300, 310) for assigning the processes to each entity.

7. The installation according to any of the preceding claims, **characterized in that** it includes means (520, 580) for modifying, during a scenario, the matrix of exchanges (280) for modifying the policy and the rules of exchanges through radio communication.
